# EUROPEAN PATENT APPLICATION

(11) **EP 3 009 037 A2**
(43) Date of publication of application: **20.04.2016**
(21) Application number: 15178024.4
(22) Date of filing: 23.07.2015
(51) Int. Cl.: A47B 57/42, B62B 3/00

(54) **A CART WITH UPRIGHTS AND A SHELF FOR CONNECTION THERETO AND ITS USE**

(30) Priority: 28.07.2014 NL 2013267
(71) Applicant: Van Klaveren, Cornelis Wesley, 2231 MD Rijnsburg (NL); Noort, Mark, 2342 BR Oegstgeest (NL)
(72) Inventor: Van Klaveren, Cornelis Wesley, 2231 MD Rijnsburg (NL); Noort, Mark, 2342 BR Oegstgeest (NL)
(74) Representative: Plaggenborg, Menko Bernard

(57) **Abstract**

The invention relates to a cart (9) with uprights (12,13), said uprights being provided with openings (14,15) for releasably coupling therein a shelf (1), wherein said shelf comprises a plank (4) shaped carrying member as well as coupling members (2,3) for releasably coupling with openings that are provided in said uprights, said coupling members comprising a notch (6) for receiving therein a portion of said upright, said portion being comprised of a material part that is positioned close to an opening. The cart is characterized in that said coupling members are provided at a side of said plank shaped carrying member, and in that during use of said cart each coupling member comprises a downwardly directed recess (6) for receiving therein a first portion and an upwardly directed recess (7) for receiving therein a second portion.

The invention also relates to the use of the shelf according to the invention.

## Description

The present invention relates to a cart with uprights and a shelf coupled thereto, in accordance with the preamble of claim 1. The invention also relates to a shelf for use with the cart according to the claim 10 and to the use of such cart according to claim 11.

Such shelf is known in the art from international patent application WO 97/10984. For example, such shelf is used with carts, generally identified as trolleys, in auctions. In horticulture especially, these trolleys are used for presenting flowers and plants at auctions and at resellers. More in general, these carts are used for positioning and transporting flowers, plants, artificial flowers, decoration articles and products that are used in flower arrangements, usually called flower arts. These trolleys have a substantially rectangular shape with a bottom frame and four wheels. Four uprights, also called posts, extend upwards from corner points of said cart in which openings are provided for receiving coupling members of a shelf. As a consequence, said shelf is hung at four coupling members. Such mounting at four corner points is deemed necessary for stably positioning said shelf during transport of said cart.

Commonly, a plurality of shelves is used, for example two, three, four or five. A disadvantage of the use of a cart with these shelves is that a shelf to be positioned above a first shelf needs to be mounted at a substantially higher position if even only a single large plant or flower is placed on said first shelf. If furthermore only lower plants or flowers are positioned on said first shelf, a large storage space remains unutilized. A practical solution might be to partly demolish a shelf, such that a frame to which the coupling members remain intact and wherein the plank carrying the plant or flower is party removed, with the consequence that the said high plant or flower can be placed inside said opening obtained by demolishing said plank, and wherein further plants and flowers may be placed on said remaining part of said plank. It will be obvious that such solution is not preferred, since said demolished shelf needs to be repaired or replaced, resulting in high costs.

There is therefore need for a cart with a shelf allowing to transport high plants and flowers and wherein no useless space is obtained, such that each cart can transport a larger number of large and small flowers or plants.

The invention aims at providing an improved cart with one or more shelves of the kind mentioned in the preamble.

The invention especially aims at providing a cart with at least one shelf, of the kind mentioned in the preamble that easily allows one to transport large and small flowers and plants side by side.

The invention also aims at providing an improved use of a cart with a shelf according to the invention.

In the present description, the terms "plants and flowers" and "plants or flowers" do not only relate to plants and flowers, but also relate to artificial flowers, decoration material and products that can be used with flower arrangements.

So as to obtain at least one of the above mentioned goals, according to a first embodiment the invention provides a cart comprising the features mentioned in claim 1. The cart according to the invention provides the advantage that sufficient space will remain for transporting high plants and flowers in combination with smaller plants and flowers and the like.

It has also shown that the cart with the shelf according to the invention provides a high stability and solidity, such that an accidental disconnection of the uprights and the shelf during its transport is excluded. Such synergistic result is completely unexpected. The knowledge of the man skilled in the art consisted of shelves to be mounted at four corner points so as to obtain a stable positioning.

In this respect, reference is made to German patent application DE 2204583 relating to a cart with uprights to which shelves are to be coupled. The solution according to said publication consists of providing additional tubes in an upright, so as to fixate the coupling member of a shelf within an upright. A simple positioning and removal of a shelf from an upright is not possible. Furthermore, a user will not be able to handle this cart on his own, since, when placing the tubes, the coupling members must be kept steadily at an accurate position.

Furthermore, US 3085693 relates to a scaffolding for use in a shop. Displacement of the scaffolding by means of wheels is not envisaged and, as a consequence, not possible. As a matter of fact, transport of the scaffolding as such in a van is not possible either. The scaffolding known from that publication is strictly embodied for passive use. As a consequence, the publications mentioned above are of no relevance for the novelty of the present invention. The present invention provides a solution that is substantially faster and easier to implement, and relates to a cart with at least one shelf for transporting plants and flowers.

Preferably, at least one of said recesses is notch shaped. More in particular it is preferred that the walls of the first recess are substantially parallel and wherein the width is substantially similar to the thickness of a material portion that is to be received in said recess. For example, the shape of the second recess may be widening from the bottom of said second recess. More in particular may the first recess comprise a notch and has the second recess a widening shape. This yields a very stable positioning of the coupling member to the upright whereas at the same time a simple and fast decoupling is obtained.

According to the invention, it is preferred that said recesses of a coupling member are embodied for receiving a portion near said same opening. Such provides a compact construction. As a consequence, the shelf can also easily be stored when not in use.

Hereafter, use will be made mainly of the term "notch" which also embodies the term "recess". The invention is certainly not limited to notches alone in the coupling members.

According to an alternative embodiment it is preferred that the recesses of a coupling member are embodied for receiving a portion near different openings. Such yields a larger mutual distance between the de notches, increasing stiffness.

A stable and secure coupling of the shelf to an upright is obtained in accordance with the invention if the first recess during use is directed downwardly and the second recess during use is directed upwardly.

A simple and stable coupling of the shelf according to the invention to a set of uprights is further obtained especially when the first recess has a smaller depth than the second recess. Said second, upwardly directed recess, may in a first step be positioned completely around a second material portion of the upright after which said first recess can be positioned above a first material portion. Subsequently, the coupling member may be shifted downward such that said first portion is received in said first recess. The distance between said both recesses should be less than the distance between the first and second portion, and as a consequence the coupling member is securely coupled to the upright. The coupling member can be easily removed by moving the coupling member upward until the first recess is taken away from the first portion after which the coupling member can be removed from the opening and the second recess can be removed from the second portion. The acts can be made mutually for both coupling members after which the shelf itself can be removed from the set of uprights in a smooth movement.

The shelf itself will not extend to a position outside the uprights, if a distance between said coupling members is less than a maximum width of said shelf.

A solid embodiment is obtained by a cart comprising a metal frame and a carrying member coupled thereto.

A solid and cheap cart with a shelf is obtained if same comprises a carrying member that is comprised of a natural material or a plastic or resin material.

According to another embodiment, the invention relates to a shelf for use in a cart according to the invention. The shelf comprises a plank shaped carrying member and coupling members for releasably coupling with openings that are provided in the uprights of said cart, said coupling members comprising a notch for receiving therein a material portion of said upright that is provided near an opening. The coupling members are provided at a side of said plank shaped carrying member. During use each coupling member comprises a downwardly directed recess for receiving therein a first material portion as well as an upwardly directed recess for receiving therein a second portion of an upright. This shelf provides the advantages as indicated above with respect to the cart. The preferred embodiments as indicated with respect to the cart according to the invention and that relate to the shelf, may be applied with the shelf in an analogous way.

According to another aspect, the invention relates to the use of a cart with two sets of two uprights, said shelf being embodied for coupling to the uprights of said first set and wherein said shelf has a length that is less than the distance between said two sets of uprights.

The cart is basically suitable for placing thereon and transporting therewith all kinds of goods and products, for example for supplying shops and the like. Preferably, the invention relates to the use of a cart for flowers, plants, artificial flowers, decoration materials and products for use with floral art.

More in particular, preference is given to the use of a cart according to the invention at a flower or plant auction, flower shops, market stalls or DIY stores.

Basically, the shelf is suitable for placing thereon and transporting therewith all kinds of goods and products, for example for supplying shops and the like. More in particular, the invention relates to the use of a shelf according to the invention in a cart for presenting or transporting flowers, plants, artificial flowers, decoration materials and products for use with floral art. For example, the cart may be placed in trucks or ships to be transported and placed in its entirety at a reseller.

However, the shelf according to the invention is not limited to these fields of application. The invention is also directed at a shelf for use in a cart at flower shops, market stalls or DIY stores.

Hereinafter, the invention will be described with reference to a drawing. The drawing shows in:
Fig. 1 a schematic perspective view of a shelf according to the invention,
Fig. 2 a schematic view of a cart,
Fig. 3 a top view of a shelf according to the invention, and
Fig. 4-6 an alternative embodiment of a coupling member.

In the figures, the same parts are denoted by the same reference numbers. However, for ease of understanding the figures, not all parts are shown that are required for a practical embodiment of the invention.

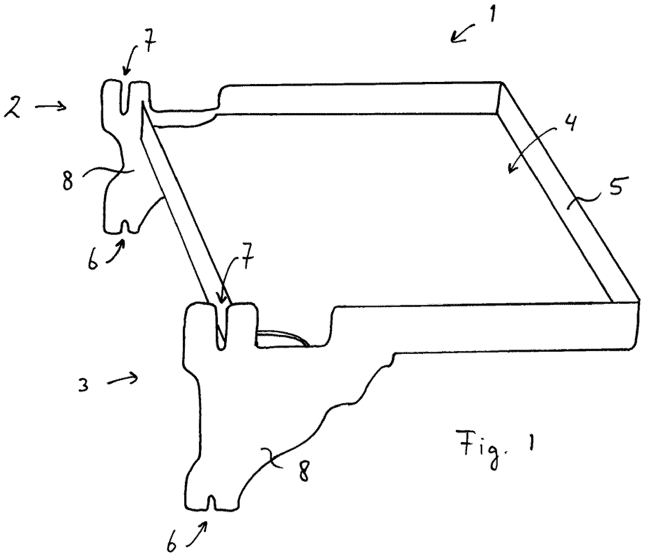

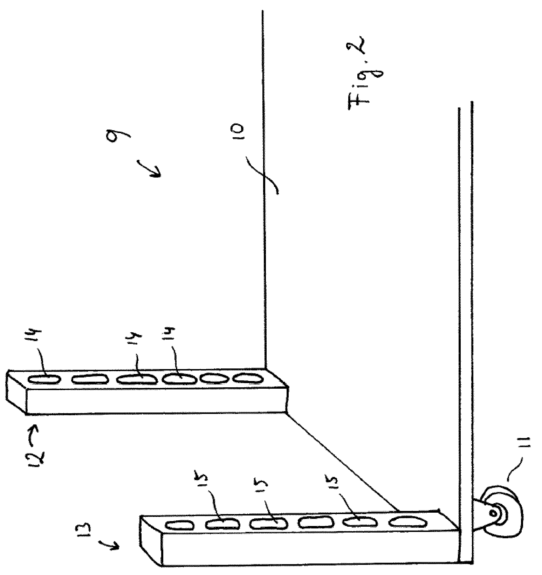

Fig. 1 shows a perspective view of a shelf 1 for use in a cart 9 according to the invention. The shelf 1 gas two coupling members 2, 3 for coupling said shelf to uprights 4, 5 of a cart (shown in Fig. 2). Said shelf 1 also comprise a support surface 4, that may be made from a wooden plank or something similar. In the embodiment shown, said plank 4 is carried by a frame 5 that is positioned at a position around and beneath said plank 4.

Each coupling member 2, 3 comprises a first notch 6 that is directed downwardly when in use and a second notch 7 that is directed upwardly when in use. Both of said notches are embodied in a cam 8, shaped as a projection with respect to said frame, said cam being rigidly connected to said frame 5. The first notch 6 has a smaller depth than the second notch 7.

Fig. 2 provides a schematic view of part of a cart 9 according to the invention with a bottom frame 10 that is carried by wheels 11 (only a single wheel is shown) for supporting same on a ground surface. In the present invention, the direction towards the ground surface is called downward or downwardly. A direction away from the ground surface is called upwardly or upward.

To the bottom frame uprights 12, 13 are provided. The uprights 12, 13 comprise openings 14, 15. Said openings 14, 15 are embodied for receiving the coupling members 2, 3 of the shelf 1 according to the invention. Each opening has a first portion 16 that is provided at a bottom side of the opening 14, 5 and a second portion 17 that is provided at a top side of said opening 14, 15.

In a first step, the second, upwardly directed notch 7 can be placed completely around a second portion 17 of the upright 12, 13 after which the first notch 6 can be positioned above a first portion 16. In a second step the coupling member 2, 3 can be moved downwards such that the first portion 16 is received in the first notch 6. The distance between said both notches 6, 7 then must be smaller than the distance from the first portion 16 to the second portion 17, ensuring that the coupling member 2, 3 is safely coupled to the upright 12, 13. The coupling member 2, 3 can be removed by moving the coupling member 2, 3 upwardly until the first notch 6 is taken away from said first portion 16 after which said coupling member 2, 3 may be removed from the opening 14, 15 and the second notch 7 can be removed from the second portion 17. These acts can be performed mutually for said both coupling members 2, 3 which allows one to remove the shelf 1 in a smooth movement from the set of uprights 14, 15.

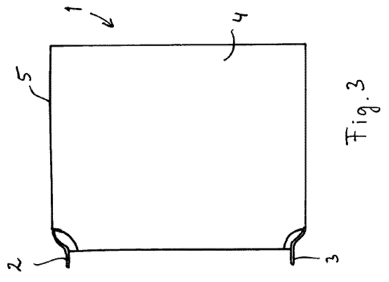

In Fig. 3 a top view of a shelf 1 is shown. The distance from both coupling members 2, 3 (measurable in a first direction) is less than the width of the shelf 1 in said same first direction. Such allows one to ensure that the width of the shelf 1 is substantially identical to the width that is occupied by said uprights 12, 13 (measured in the same first direction).

The length of the shelf 1 according to the invention, measured in a direction perpendicular to the first direction mentioned above, is less than the length of the cart. Said length is determined by the distance between two sets of uprights. In Fig. 2 a single set of uprights is shown.

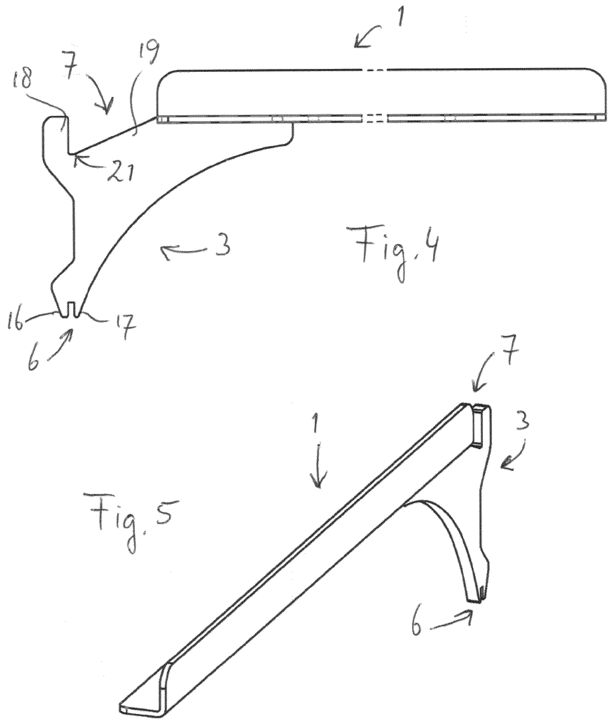

Fig. 4 shows a side view of a shelf 1 wherein the coupling member 3 has a shape that is different from the shape as shown in Fig. 1. The recess 6 is substantially shaped as shown in Fig. 1, wherein the walls 16, 17 of the first recess 6 are substantially parallel and wherein the width of the recess 6 is of substantially the same value as the thickness of material portion 20 (see Fig. 1) that is received in recess 6. The shape of the walls 17, 19 of said second recess 7 is widening from the bottom 21 of said recess 7. This provides additional space for removing the shelf from the openings 14, 15 of the uprights 12, 13. The stability of the shelf 1 is not influenced negatively by this feature.

Fig. 5 shows a perspective view of part of the frame of the shelf 1 according to Fig. 4.

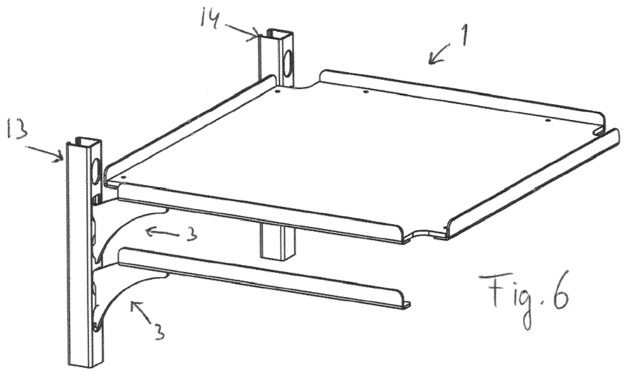

The shelf's length can suitably be maximally half the distance between two sets of uprights of a cart, which basically allows two shelves to be coupled to two oppositely positioned sets of uprights, and which provides a substantially continuous support surface in a cart. A cart with uprights that for example each may have 30 openings, may in total contain at each upright at least fifteen shelves 1 according to the invention, as shown in Fig. 6, when the coupling members are embodied for coupling to two subsequent openings. In that case, thirty shelves may be transported on a single cart. In case of coupling members that are embodied in a compact form, and wherein each coupling member is received in a single opening, even 60 shelves according to the invention may transported in one cart.

The cart according to the invention furthermore has as an advantage that the shelves may both be connected to the inside of the uprights (the sides of the uprights that are directed towards uprights of another set of uprights) and to the outside of said uprights.

The invention is not limited to the embodiments as mentioned above and as shown in the drawing. The invention is limited only by the appending claims.

The invention also relates to every combination of features that are described above independently from each other.

## Claims

1. A cart with uprights, said uprights being provided with openings for releasably coupling therein a shelf, wherein said shelf comprises a plank shaped carrying member as well as coupling members for releasably coupling with openings that are provided in said uprights, said coupling members comprising a notch for receiving therein a portion of said upright, said portion being comprised of a material part that is positioned close to an opening, **characterized in that** said coupling members are provided at a side of said plank shaped carrying member, and **in that** during use of said cart each coupling member comprises a downwardly directed recess for receiving therein a first portion and an upwardly directed recess for receiving therein a second portion.

2. A cart according to claim 1, wherein at least one of said recesses is notch shaped.

3. A cart according to claim 1, wherein said recesses of a coupling member are embodied for receiving a portion near said same opening.

4. A cart according to claim 1, wherein the recesses of a coupling member are embodied for receiving a portion near different openings.

5. A cart according to claim 4, wherein the first recess has a smaller depth than the second recess.

6. A cart according to any of the preceding claims, wherein the walls of the first recess are substantially parallel and wherein the width is substantially similar to the thickness of a material portion that is to be received in said recess; and wherein the shape of the second recess is widening from the bottom of said second recess.

7. A cart according to any of the preceding claims, wherein a distance between said coupling members is less than a maximum width of said shelf.

8. A cart according to any of the preceding claims, comprising a metal frame and a carrying member coupled thereto.

9. A cart according to any of the preceding claims, comprising a carrying member that is comprised of a natural material or a plastic or resin material.

10. A shelf for use in a cart according to any of the preceding claims, comprising a plank shaped carrying member and coupling members for releasably coupling with openings that are provided in the uprights of said cart, said coupling members comprising a notch for receiving therein a material portion of said upright that is provided near an opening, **characterized in that** the coupling members are provided at a side of said plank shaped carrying member, and **in that** during use each coupling member comprises a downwardly directed recess for receiving therein a first material portion as well as an upwardly directed recess for receiving therein a second portion.

11. A use of a cart with two sets of two uprights, said shelf being embodied for coupling to the uprights of said first set and wherein said shelf has a length that is less than the distance between said two sets of uprights.

12. A use according to claim 11 for flowers, plants, artificial flowers, decoration materials and products for use with floral art.

13. A use according to claim 11 or 12 at a flower or plant auction, flower shops, market stalls or DIY stores.

14. A use according to claim 11 or 12 for transporting flowers, plants, artificial flowers, decoration materials and products for use with floral art.

15. A use according to claim 11 or 12 for presenting flowers, plants, artificial flowers, decoration materials and products for use with floral art.
